# DEMANDE DE BREVET EUROPEEN

(11) **EP 0 969 225 A2**
(43) Date de publication de la demande: **05.01.2000**
(21) Numéro de dépôt: 99401660.8
(22) Date de dépôt: 02.07.1999
(51) Int. Cl.: F16H 3/00, F16H 3/093

(54) **Boîte de vitesses à deux arbres secondaires et deux embrayages**

(30) Priorité: 03.07.1998 FR 9808508; 03.07.1998 FR 9808509
(71) Demandeur: RENAULT, 92109 Boulogne-Billancourt (FR)
(72) Inventeur: Loscq, Robert, 78310 Maurepas (FR); Raoul, Michel, 78990 Elancourt (FR)

(57) **Abrégé**

L'invention concerne une boîte de vitesses (110) à arbres parallèles (112, 114, 116), dans laquelle des pignons (118, 120) portés par un arbre primaire (112) lié en rotation au moteur du véhicule engrènent avec des pignons (122, 124, 128, 130, 132) portés par des arbres secondaires (114, 116) liés en rotation à une couronne d'un différentiel pour établir différents rapports de démultiplication, caractérisée en ce que tous les pignons (122, 124, 128, 130, 132, 134) sont montés fous à rotation sur leurs arbres (112, 114, 116), les pignons fous (122, 124, 128) d'un des arbres secondaires (114) étant tous solidaires en rotation, et les pignons (122, 124, 128, 130, 132, 134) portés par les arbres secondaires (114, 116) pouvant y être sélectivement liés par des moyens de crabotage (154, 156, 158), les pignons portés par l'arbre primaire (118, 120 )pouvant être y sélectivement liés par au moins deux embrayages (150, 152) indépendants, pour établir les rapports de démultiplication, les deux embrayages (150, 152) pouvant étant être actionnés alternativement, pour permettre des changements de rapports sans discontinuité du couple aux roues du véhicule.
Application à la réalisation d'une boîte de vitesses robotisée.

## Description

L'invention concerne une boîte de vitesses de véhicule automobile.

L'invention concerne plus particulièrement une boîte de vitesses de véhicule automobile, à arbres parallèles, du type qui comporte un arbre primaire lié en rotation au moteur du véhicule, et deux arbres secondaires liés en rotation à une couronne d'un différentiel pour entraîner les roues du véhicule, du type dans lequel des pignons portés par l'arbre primaire sont susceptibles d'engrener sélectivement avec des pignons portés par les arbres secondaires pour établir différents rapports de démultiplication et transmettre un couple du moteur aux roues du véhicule.

On connaît de nombreuses boîtes de vitesses du type précédemment décrit.

Il s'agit généralement de boîtes de vitesses à commande manuelle, dont l'arbre primaire est lié en rotation au moteur du véhicule par l'intermédiaire d'un embrayage, et dont les arbres secondaires engrènent avec la couronne du différentiel qui transmet le couple du moteur aux roues du véhicule.

Ces boîtes présentent l'avantage d'être très compactes, puisque les pignons des arbres secondaires sont répartis de manière égale sur les deux arbres secondaires, ce qui permet de réduire considérablement la longueur occupée par les pignons des engrenages correspondants sur l'arbre primaire.

Le document US-A-5.715.727 décrit un exemple d'une telle boîte de vitesses.

Cette disposition est particulièrement appropriée à une architecture de groupe motopropulseur dans laquelle l'ensemble formé du moteur et de la boîte de vitesses est implanté transversalement par rapport au véhicule.

Toutefois, ces boîtes de vitesses n'offrent pas de prestations de fonctionnement supérieures aux boîtes de vitesses conventionnelles à deux arbres parallèles. Ainsi, lors d'un changement de rapport, et particulièrement lors d'un changement de rapport ascendant, le conducteur du véhicule est contraint de débrayer momentanément pour effectuer le changement de rapport, ce qui conduit à une interruption momentanée du couple moteur transmis aux roues, ce qui est pénalisant tant en termes d'agrément de conduite, qu'en termes d'entraînement du véhicule par le moteur.

Pour pallier cet inconvénient, l'invention propose une boîte de vitesses permettant dans certains cas de fournir constamment un couple moteur aux roues du véhicule.

Dans ce but, l'invention propose une boite de vitesses du type décrit ci-dessus, caractérisée en ce que tous les pignons sont montés fous à rotation sur leurs arbres respectifs, les pignons fous d'un des arbres secondaires étant tous solidaires en rotation les uns des autres, les pignons fous des arbres secondaires étant susceptibles d'être sélectivement liés en rotation aux arbres qui les portent par des moyens de crabotage et les pignons fous de l'arbre primaire étant susceptibles d'être sélectivement liés en rotation à l'arbre qui les porte par un premier et un deuxième embrayages indépendants associés, pour établir les rapports de démultiplication, les deux embrayages étant par ailleurs susceptibles d'être actionnés alternativement, pour permettre des changements de rapports sans discontinuité du couple transmis aux roues du véhicule.

Selon d'autres caractéristiques de l'invention :
- l'arbre primaire porte un premier pignon fou comportant un premier et un deuxième jeux de dentures, et un deuxième pignon fou comportant un troisième et un quatrième jeux de dentures, lesquelles dentures engrènent avec les pignons fous des arbres secondaires ;
- un premier arbre secondaire porte un premier et un deuxième pignons fous, solidaires en rotation, qui engrènent respectivement avec les deuxième et quatrième jeux de dentures appartenant chacun respectivement au premier et au deuxième pignons fous de l'arbre primaire, et porte un troisième pignon de marche arrière, solidaire en rotation des premier et deuxième pignons fous, qui engrène avec un pignon fou d'un deuxième arbre secondaire ;
- le deuxième arbre secondaire porte trois pignons fous indépendants, parmi lesquels un quatrième pignon fou qui engrène avec le premier jeu de dentures appartenant au premier pignon fou de l'arbre primaire, un cinquième pignon fou qui engrène avec le troisième jeu de dentures appartenant au deuxième pignon fou de l'arbre primaire, et un sixième pignon fou qui engrène avec le troisième pignon fou de marche arrière du premier arbre secondaire ;
- les moyens de crabotage comportent :
   un premier crabot simple permettant de craboter simultanément les pignons fous solidaires en rotation sur le premier arbre secondaire,
   un deuxième crabot simple permettant de craboter le quatrième pignon fou sur le deuxième arbre secondaire, et
   un troisième crabot double permettant de craboter sélectivement le cinquième ou bien le sixième pignon fou sur le deuxième arbre secondaire ;
- un premier rapport de marche avant correspond à l'actionnement du deuxième embrayage associé au deuxième pignon fou, le premier embrayage associé au premier pignon fou étant relâché, et au crabotage du quatrième pignon fou ;
- un deuxième rapport de marche avant correspond à l'actionnement du premier embrayage, le deuxième embrayage étant relâché, et au crabotage du quatrième pignon fou ;
- un troisième rapport de marche avant correspond à l'actionnement du deuxième embrayage, le premier embrayage étant relâché, et au crabotage des pignons fous portés par le premier arbre secondaire ;
- un quatrième rapport de marche avant correspond à l'actionnement du premier embrayage, le deuxième embrayage étant relâché, et au crabotage des pignons fous portés par le premier arbre secondaire ;
- un cinquième rapport de marche avant correspond à l'actionnement du deuxième embrayage, le premier embrayage associé au premier pignon fou de l'arbre primaire étant relâché, et au crabotage du cinquième pignon fou ;
- un sixième rapport de marche avant correspond à l'actionnement du premier embrayage, le deuxième embrayage étant relâché, et au crabotage du cinquième pignon fou ;
- un rapport de marche arrière correspond à l'actionnement du deuxième embrayage, le premier embrayage associé au premier pignon fou de l'arbre primaire étant relâché, et au crabotage du sixième pignon fou ;
- le passage d'un rapport inférieur de rang impair à un rapport supérieur de rang pair est commandé par relâchement progressif de l'embrayage associé au rapport inférieur de rang impair, tandis que l'embrayage associé au rapport supérieur de rang pair est actionné simultanément de manière progressive, de sorte que le changement de rapport est effectué sans discontinuité du couple transmis aux roues du véhicule ;
- le passage d'un rapport inférieur de rang pair à un rapport supérieur de rang impair consécutif est réalisé par relâchement de l'embrayage associé au rapport inférieur de rang pair, puis par décrabotage du pignon correspondant au rapport inférieur de rang pair, puis par crabotage du pignon correspondant au rapport supérieur de rang impair, et enfin par actionnement de l'embrayage associé au rapport supérieur de rang impair ;
- le passage d'un rapport supérieur à un rapport inférieur est réalisé par relâchement de l'embrayage associé au rapport supérieur, puis par décrabotage du pignon correspondant au rapport supérieur, puis par crabotage du pignon correspondant au rapport inférieur, et enfin par actionnement de l'embrayage associé au rapport inférieur ;
- les deux embrayages sont groupés dans une position centrale de la boîte entre les deux pignons fous de l'arbre primaire, et les premier et quatrième pignons fous des arbres secondaires sont agencés d'un côté de l'ensemble formé par les embrayages les deuxième, troisième, cinquième et sixième pignons fous étant agencés du coté opposé ;
- les crabots et les embrayages sont actionnés par des actionneurs et la boîte est associée à une unité centrale de commande des actionneurs.

L'invention permet également de fournir constamment un couple moteur aux roues du véhicule.

Dans ce cas, tous les pignons sont montés fous à rotation sur leurs arbres respectifs, les pignons fous des arbres secondaires étant susceptibles d'être sélectivement liés en rotation aux arbres qui les portent par des moyens de crabotage, et les pignons fous de l'arbre primaire étant susceptibles d'être sélectivement liés en rotation à l'arbre qui les porte par au moins deux embrayages indépendants associés, de façon à réaliser des engrenages indépendants correspondant aux rapports de démultiplication associés aux pignons d'arbres secondaires, les deux embrayages étant par ailleurs susceptibles d'être actionnés alternativement, en passant par un état dans lequel ils sont tous deux embrayés, pour permettre des changements de rapports sans discontinuité du couple transmis aux roues du véhicule.
- deux des embrayages associés à deux pignons fous de l'arbre primaire qui engrènent avec deux pignons fous d'un même arbre secondaire, sont susceptibles d'être actionnés ensemble pour définir un rapport déterminé de transmission, dans lequel ils sont simultanément embrayés pour transmettre un couple important ;
- au moins un arbre secondaire comporte un pignon fou de marche arrière qui engrène directement avec un pignon fou de l'autre arbre secondaire, pour déterminer un rapport de transmission de marche arrière ;
- l'arbre primaire comporte un premier et un deuxième pignons fous à trois jeux de dentures, qui sont associés à un premier et un deuxième embrayages correspondants, et chaque arbre secondaire comporte quatre pignons fous, associés deux par deux à quatre crabots doubles correspondants ;
- le premier arbre secondaire porte un premier et un deuxième pignons fous engrenant respectivement avec un premier et un troisième jeux de dentures du premier pignon fou de l'arbre primaire, porte un troisième et un quatrième pignons fous engrenant respectivement avec un quatrième et un sixième jeux de dentures du deuxième pignon fou de l'arbre primaire, et porte le pignon de marche arrière, qui est lié en rotation au quatrième pignon fou, et engrène avec un huitième pignon fou du deuxième arbre secondaire ;
- le deuxième arbre secondaire porte un cinquième et un sixième pignons fous engrenant respectivement avec un deuxième et le troisième jeux de dentures du premier pignon fou de l'arbre primaire, et porte un septième et le huitième pignons fous engrenant respectivement avec un cinquième jeu de dentures du deuxième pignon fou de l'arbre primaire et avec le pignon de marche arrière du premier arbre secondaire ;
- les moyens de crabotage comportent :
   un premier crabot double permettant de craboter sélectivement le premier ou bien le deuxième pignon fou sur le premier arbre secondaire,
   un deuxième crabot double permettant de craboter sélectivement le troisième ou bien le quatrième pignon fou lié au pignon de marche arrière sur le premier arbre secondaire,
   un troisième crabot double permettant de craboter sélectivement le cinquième ou bien le sixième pignon fou sur le deuxième arbre secondaire, et
   un quatrième crabot double permettant de craboter sélectivement le septième ou le huitième pignon fou sur le deuxième arbre secondaire ;
- le premier rapport de marche avant correspond :
   soit à l'actionnement du premier et du deuxième embrayages, et au crabotage respectif des cinquième et septième pignons fous pour transmettre un couple important,
   soit à l'actionnement du seul deuxième embrayage, le premier embrayage étant relâché, et au crabotage du septième pignon fou ;

. le deuxième rapport de marche avant correspond à l'actionnement du premier embrayage, le deuxième embrayage étant relâché, et au crabotage du sixième pignon fou ;
. le troisième rapport de marche avant correspond à l'actionnement du deuxième embrayage, le premier embrayage étant relâché, et au crabotage du quatrième pignon fou ;
. le quatrième rapport de marche avant correspond à l'actionnement du premier embrayage, le deuxième embrayage étant relâché, et au crabotage du deuxième pignon fou ;
. le cinquième rapport de marche avant correspond à l'actionnement du deuxième embrayage, le premier embrayage étant relâché, et au crabotage du septième pignon fou ;
. le sixième rapport de marche avant correspond à l'actionnement du premier embrayage, le deuxième embrayage étant relâché, et au crabotage du premier pignon fou ;
. le rapport de marche arrière correspond à l'actionnement du deuxième embrayage, le premier embrayage étant relâché, et au crabotage du huitième pignon fou ;

- le passage d'un rapport inférieur à un rapport supérieur consécutif est réalisé par crabotage du pignon correspondant au rapport supérieur, puis par relâchement progressif de l'embrayage associé au rapport inférieur, tandis que l'embrayage associé au rapport supérieur est simultanément actionné progressivement, de sorte que le changement de rapport est effectué sans interruption du couple transmis aux roues du véhicule ;
- le passage d'un rapport supérieur à un rapport inférieur quelconque est réalisé par relâchement de l'embrayage associé au rapport supérieur, puis décrabotage du pignon correspondant au rapport supérieur, l'embrayage associé au rapport supérieur étant relâché, puis par crabotage du pignon associé au rapport inférieur et enfin par actionnement de l'embrayage correspondant au rapport inférieur ;
- le passage d'un rapport supérieur à un rapport inférieur consécutif est réalisé par crabotage du pignon correspondant au rapport inférieur, puis par relâchement progressif de l'embrayage associé au rapport supérieur, tandis que l'embrayage associé au rapport inférieur est actionné simultanément de manière progressive, de sorte que le changement de rapport est effectué sans interruption du couple transmis aux roues du véhicule ;
- les deux embrayages sont groupés dans une position centrale de la boîte entre les deux pignons fous de l'arbre primaire, et les deux crabots de chaque arbre secondaire sont agencés de chaque côté de l'ensemble formé par les embrayages ;

D'autres caractéristiques et avantages de l'invention apparaîtront à la lecture de la description détaillée qui suit pour la compréhension de laquelle on se reportera aux dessins annexés dans lesquels :
- la figure 1 est une vue en coupe à plans rabattus selon la ligne 1-1 de la figure 2 d'une première boîte de vitesses selon l'invention ;
- la figure 2 est une vue schématique en coupe, dans le plan 2-2 de la figure 1, de l'agencement des arbres d'une boîte de vitesses selon la figure 1 ;
- la figure 3 est une vue schématique à plans rabattus représentant le cheminement du couple dans la boîte de vitesses selon un premier rapport de marche avant ;
- la figure 4 est une vue schématique à plans rabattus représentant le cheminement du couple dans la boîte de vitesses selon un deuxième rapport de marche avant ;
- la figure 5 est une vue schématique à plans rabattus représentant le cheminement du couple dans la boîte de vitesses selon un troisième rapport de marche avant :
- la figure 6 est une vue schématique à plans rabattus représentant le cheminement du couple dans la boîte de vitesses selon un quatrième rapport de marche avant ;
- la figure 7 est une vue schématique à plans rabattus représentant le cheminement du couple dans la boîte de vitesses selon un cinquième rapport de marche avant ;
- la figure 8 est une vue schématique à plans rabattus représentant le cheminement du couple dans la boîte de vitesses selon un sixième rapport de marche avant ;
- la figure 9 est une vue schématique à plans rabattus représentant le cheminement du couple dans cette boîte de vitesses selon un rapport de marche arrière.
- la figure 10 est une vue en coupe à plans rabattus selon la ligne 1-1 de la figure 11 d'une deuxième boîte de vitesses selon l'invention ;
- la figure 11 est une vue schématique en coupe, dans le plan 2-2 de la figure 1, de l'agencement des arbres d'une boîte de vitesses selon la figure 10 ;
- la figure 12 est une vue schématique à plans rabattus représentant le cheminement du couple dans cette boîte de vitesses selon un premier rapport de marche avant destiné à transmettre un couple important pour lancer le véhicule ;
- la figure 13 est une vue schématique à plans rabattus représentant le cheminement du couple dans cette boîte de vitesses selon un premier rapport de marche avant lorsque le véhicule est lancé ;
- la figure 14 est une vue schématique à plans rabattus représentant le cheminement du couple dans cette boîte de vitesses selon un deuxième rapport de marche avant ;
- la figure 15 est une vue schématique à plans rabattus représentant le cheminement du couple dans cette boîte de vitesses selon un troisième rapport de marche avant ;
- la figure 16 est une vue schématique à plans rabattus représentant le cheminement du couple dans cette boîte de vitesses selon un quatrième rapport de marche avant ;
- la figure 17 est une vue schématique à plans rabattus représentant le cheminement du couple dans cette boîte de vitesses selon un cinquième rapport de marche avant ;
- la figure 18 est une vue schématique à plans rabattus représentant le cheminement du couple dans cette boîte de vitesses selon un sixième rapport de marche avant ; et
- la figure 19 est une vue schématique à plans rabattus représentant le cheminement du couple dans cette boîte de vitesses selon un rapport de marche arrière.

Dans la description qui va suivre, des chiffres de référence identiques désignent des pièces identiques ou ayant des fonctions similaires.

D'autres caractéristiques et avantages de l'invention apparaîtront à la lecture de la description détaillée qui suit pour la compréhension de laquelle on se reportera aux dessins annexés dans lesquels :

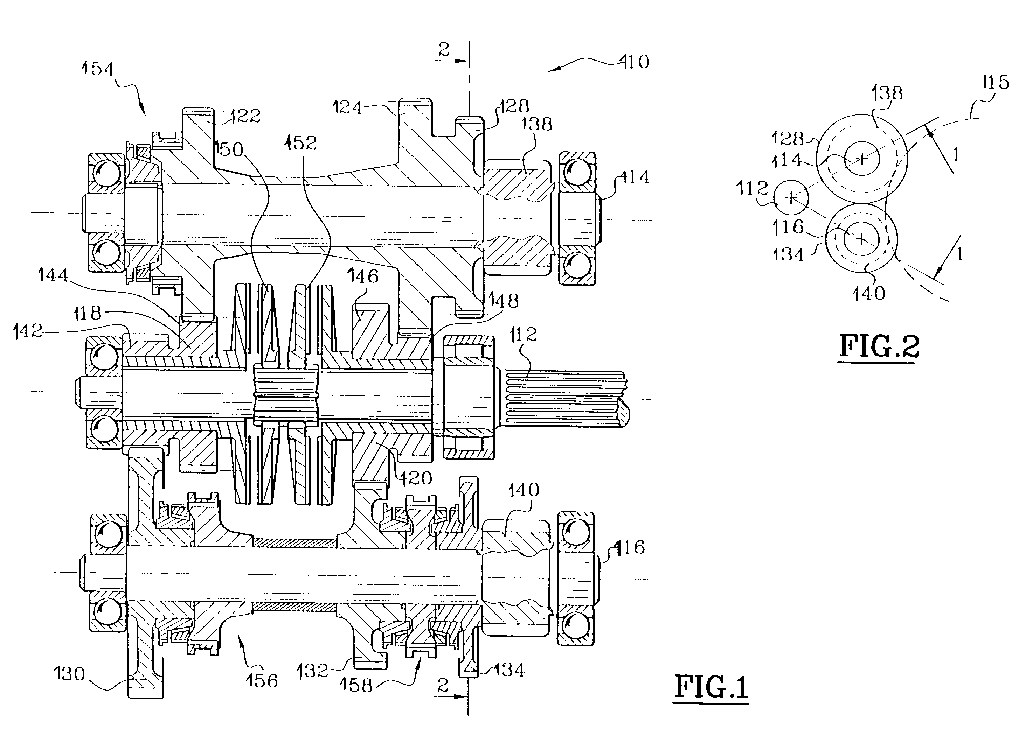

On voit sur la figure 1 l'ensemble d'une première boîte de vitesses 110 réalisée suivant l'invention. De manière connue, la boîte de vitesses 110 comporte trois arbres parallèles, un arbre primaire 112 et deux arbres secondaires 114 et 116. Dans un plan transversal à la direction des axes de l'arbre primaire 112, du premier arbre secondaire 114 et du deuxième arbre secondaire 116, et comme on peut le voir sur la représentation schématique de la figure 2, les axes des arbres 112, 114, et 116 sont disposés au sommets d'un V.

Conformément à l'invention, la boîte comporte des pignons qui sont montés fous à rotation sur leurs arbres respectifs.

Ainsi, de la gauche vers la droite de la figure 1, l'arbre primaire 112 de la boîte de vitesses 110 porte deux pignons fous 118 et 120 comportant chacun deux jeux de dentures, le premier arbre secondaire 114 porte trois pignons fous 122, 124, et 128, solidaires en rotation les uns des autres, le pignon fou 128 étant un pignon fou de marche arrière. D'une manière analogue, le deuxième arbre 116 porte trois pignons fous 130, 132 et 134.

Cet exemple de disposition est ici adapté à une boîte de vitesses définissant six rapports de marche avant et un rapport de marche arrière, mais n'est en aucun cas restrictif de l'invention. Un nombre de pignons plus important permettrait de disposer d'une boîte de vitesses offrant plus de rapports de démultiplication.

Les pignons fous 118 et 120 de l'arbre primaire 112 sont disposés axialement de part et d'autre d'un premier embrayage 150 et d'un deuxième embrayage 152, dont la fonction sera décrite ultérieurement.

D'une manière analogue, les pignons fous des arbres secondaires sont agencés de part et d'autre des embrayages 150 et 152. Ainsi, le pignon fou 122 du premier arbre secondaire 114 et le pignon fou 130 du deuxième arbre secondaire 116 sont agencés du même côté gauche de la figure 1 que le pignon fou 118 de l'arbre primaire 112. De même, les pignons fous 124 et 128 du premier arbre secondaire 114, et les pignons fous 132 et 134 du deuxième arbre secondaire 116 sont agencés du même côté droit que le pignon fou 120 de l'arbre primaire 112.

La boîte de vitesses 110 réalise plusieurs engrenages formés par des couples de pignons fous appartenant à l'arbre primaire 112 et aux arbres secondaires 114 et 116. Tous les pignons fous engrènent en permanence et des moyens de crabotage, en ce qui concerne les arbres secondaires 114 et 116, et d'embrayage, en ce qui concerne l'arbre primaire 112, permettent de lier sélectivement les pignons fous aux arbres qui les portent, pour permettre, comme on le verra ultérieurement, à ces engrenages de transmettre le couple du moteur de l'arbre primaire 112 à un arbre secondaire 114 ou 116.

Ainsi, un couple moteur appliqué à l'arbre d'entrée 112 peut être transmis soit au premier arbre secondaire 114 qui est susceptible de le transmettre à une couronne 115 du différentiel du véhicule par l'intermédiaire d'un pignon de sortie 138, soit au deuxième arbre secondaire 116 qui le transmet à la même couronne 115 de différentiel par l'intermédiaire d'un pignon de sortie 140, ces deux pignons de sortie étant 138 et 140 étant solidaires en rotation des arbres 114 et 116.

Sur la figure 1, les pignons fous des arbres secondaires sont référencés par ordre croissant de la gauche vers la droite et du haut vers le bas.

Dans cette configuration, le premier pignon fou 122 du premier arbre secondaire 114 engrène en permanence avec un deuxième jeu 144 de dentures du premier pignon fou 118 de l'arbre primaire 112, et le deuxième pignon fou 124 du premier arbre secondaire 114 engrène en permanence avec un quatrième jeu 148 de dentures du deuxième pignon fou 120 de l'arbre primaire 112.

D'une manière analogue, le quatrième pignon fou 130 du deuxième arbre secondaire 116 engrène en permanence avec un premier jeu 142 de dentures du premier pignon fou 118 de l'arbre primaire 112, et le cinquième pignon fou 132 engrène en permanence avec un troisième jeu de dentures 146 du deuxième pignon fou 120 de l'arbre primaire 112.

Enfin, le troisième pignon fou 128 du premier arbre secondaire 114, ou pignon de marche arrière 128, qui est solidaire en rotation des premier et deuxième pignons fous 122 et 124, engrène en permanence avec le sixième pignon fou 134 du deuxième arbre secondaire 116 pour, comme on le verra ultérieurement, définir un rapport de marche arrière.

La boîte de vitesses 110 permet d'établir différents rapports de réduction ou de démultiplication déterminés par la liaison en rotation des pignons fous aux arbres qui les portent, liaison faisant intervenir au moins un pignon fou de l'arbre primaire 112 et au moins un pignon fou d'un des arbres secondaires 114 ou 116.

Dans ce but, les moyens d'embrayage, comportant les embrayages 150 et 152 précédemment décrits, permettent de lier respectivement en rotation le premier pignon fou 118 ou le deuxième pignon fou 20 à l'arbre primaire 112.

Dans le mode de réalisation préféré de l'invention, la boîte de vitesses 110 ne comporte que les deux embrayages 150 et 152, et l'arbre primaire 112 est directement entraîné par le moteur du véhicule.

Avantageusement, l'arbre primaire 112, entraîné en permanence en rotation par le moteur (non représenté) du véhicule, est susceptible de transmettre le couple du moteur aux arbres secondaires 114 et 116 par l'intermédiaire des pignons fous 118 ou 120, liés en rotation à l'arbre primaire 112 par l'intermédiaire des embrayages 150 ou 152, si bien qu'un véhicule équipé d'une telle boîte ne nécessite pas d'embrayage interposé entre le moteur et la boîte de vitesses 110.

D'une manière analogue aux pignons fous de l'arbre primaire 112, les pignons fous des arbres secondaires 114 et 116 peuvent être sélectivement liés aux arbres qui les portent. Ainsi, un premier crabot simple 154 permet de lier sélectivement en rotation l'ensemble formé par les premier pignon fou 122, deuxième pignon fou 124 et troisième pignon fou 128 au premier arbre secondaire 114, un deuxième crabot simple 156 permet de lier sélectivement le quatrième pignon fou 130 en rotation au deuxième arbre secondaire 116, et un troisième crabot double 158 permet de lier sélectivement le cinquième pignon fou 132 ou le sixième pignon fou 134 en rotation au deuxième arbre secondaire 116.

Le fonctionnement des crabots simples ou doubles étant connu de l'état de la technique, il ne fera pas l'objet d'un approfondissement particulier dans cette description.

Avantageusement, en vue de la réalisation d'une boîte de vitesses à commande dite "robotisée", les crabots 154, 156, et 158, ainsi que les embrayages 150 et 152, sont actionnés par des actionneurs (non représentés) commandés par une unité centrale de commande (non représentée) de la boîte de vitesses 110. La boîte de vitesses 110 est ainsi appelée boîte de vitesses robotisée, dans la mesure où les mouvements que le conducteur imprime à un levier de commande (non représenté) sont convertis par l'unité centrale de commande en ordres d'actionnement des crabots 154, 156, et 158 et des embrayages 150 et 152.

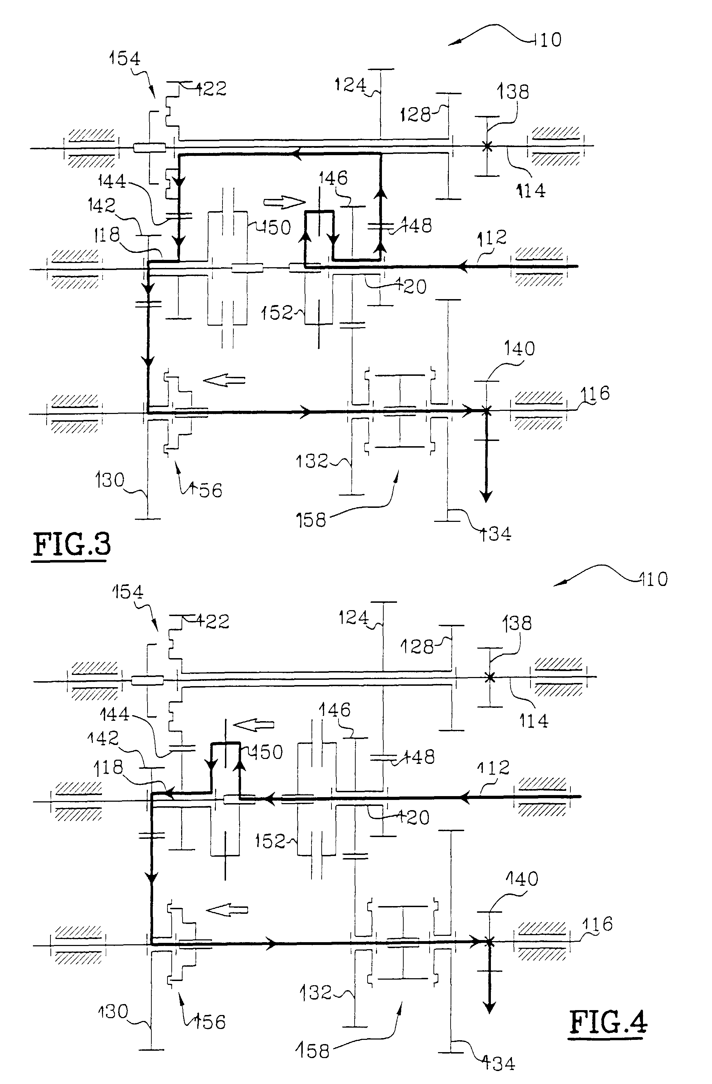

La figure 3 illustre le fonctionnement de la boîte de vitesses 110 selon un premier rapport de marche avant.

Dans ce cas, le rapport de démultiplication de premier rapport de marche avant est obtenu par l'actionnement de l'embrayage 152 qui lie en rotation le quatrième jeu de dentures 148 à l'arbre primaire 112, et par le deuxième crabot 156 qui lie en rotation le quatrième pignon fou 130 au deuxième arbre secondaire 116. Le couple du moteur transite donc par l'ensemble portant les pignons fous 122, 124 et 128, tournant librement sur le premier axe secondaire 114 sans y être lié, puis par le premier pignon fou 118 de l'arbre primaire 112, et enfin par le deuxième arbre secondaire 116.

Lorsque du passage d'un rapport inférieur de rang impair à un rapport supérieur de rang pair consécutif, et comme c'est notamment le cas lorsqu'il désire passer du premier rapport de marche avant au deuxième rapport de marche avant illustré en référence à la figure 4, l'unité centrale de commande de la boîte de vitesses 110 commande l'actionnement progressif de l'embrayage associé au pignon fou de l'arbre primaire correspondant au rapport supérieur, en même temps qu'il débraye l'embrayage associé au pignon fou de l'arbre primaire correspondant au rapport inférieur que l'utilisateur désire quitter.

Ainsi, comme représenté à la figure 4, le passage du premier rapport de marche avant au deuxième rapport de marche avant par embrayage progressif du premier pignon fou 118 de l'arbre primaire 112 par l'intermédiaire de l'embrayage 150, en même temps que l'embrayage 152 est progressivement relâché, désaccouplant ainsi le deuxième pignon fou 120 de l'arbre primaire 112.

On voit que le passage d'un rapport inférieur de rang impair à un rapport supérieur de rang pair consécutif s'effectue par transfert progressif du couple moteur d'un embrayage 150 ou 152 à un autre, ce qui présente l'avantage de ne pas interrompre la transmission du couple de l'arbre primaire 112 à l'arbre secondaire 114 ou 116 correspondant au rapport engagé, et permet d'améliorer les performances du véhicule tout en augmentant l'agrément de conduite. La boîte de vitesses 110 selon l'invention permet par conséquent des changements de rapport progressifs.

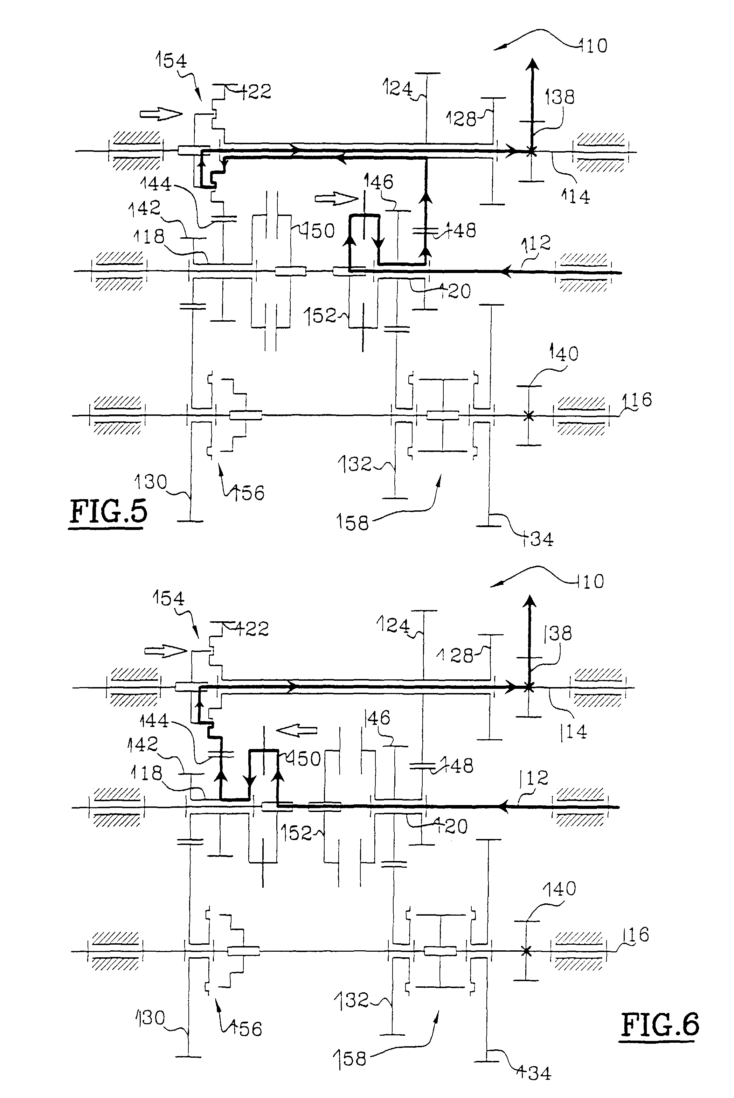

Comme l'illustre la figure 5, l'engagement du troisième rapport de marche avant est effectué par relâchement de l'embrayage 150, puis décrabotage du pignon fou 130 par le deuxième crabot 156, puis crabotage du premier pignon fou 122 par le premier crabot simple 154 et enfin par embrayage du quatrième jeu de dentures 148 par le deuxième embrayage 152.

Dans ce cas, le couple moteur n'est plus transmis par le deuxième arbre secondaire 116 mais par le premier arbre secondaire 114.

D'une façon analogue, comme l'illustre la figure 6, un quatrième rapport de marche avant est obtenu par embrayage progressif du deuxième jeu de dentures 144 par l'intermédiaire de l'embrayage 150, et relâchement progressif de l'embrayage 152, qui désolidarise en rotation le quatrième jeu de dentures 148 de l'arbre primaire 114.

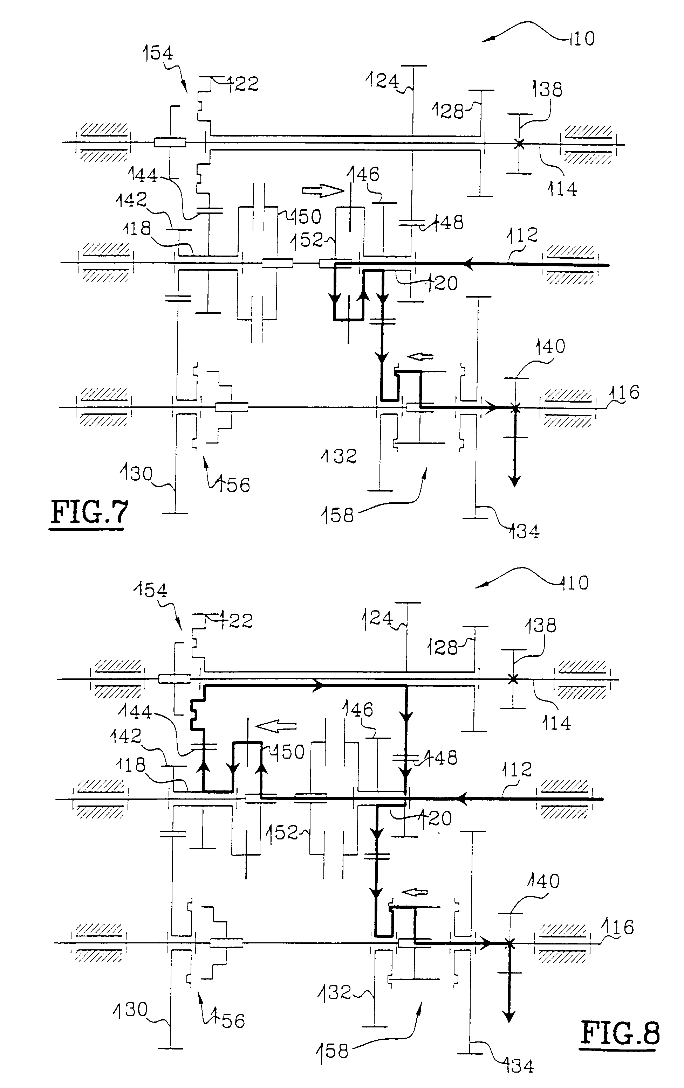

Un cinquième rapport de marche avant est obtenu, comme on peut le voir à la figure 7, par relâchement du premier embrayage 150, puis décrabotage du premier pignon fou 122 par le premier crabot 154, puis crabotage du cinquième pignon fou 132 par le troisième crabot double 158, et enfin actionnement du deuxième embrayage 152 qui lie en rotation le troisième jeu de dentures 146 à l'arbre primaire 112.

Enfin, comme l'illustre la figure 8, un sixième rapport de marche avant est obtenu, comme on peut le voir à la figure 8, par relâchement de l'embrayage 152 et actionnement de l'embrayage 150. Dans ce cas, et d'une façon analogue à celle décrite en relation avec le premier rapport de marche avant, le couple du moteur transite par le premier pignon fou 118, puis par l'ensemble portant les pignons fous 122, 124 et 128, puis par le deuxième pignon fou 120, et enfin par le deuxième arbre secondaire 116.

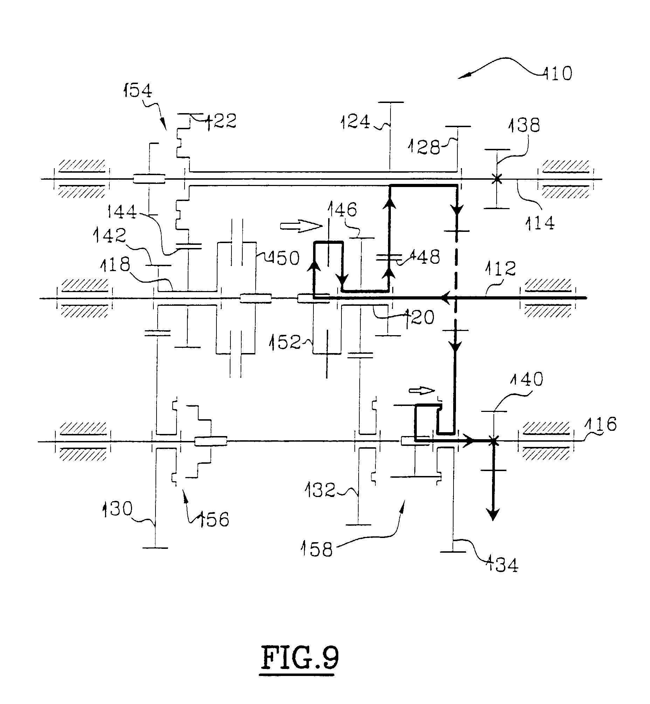

En outre, et comme l'illustre la figure 9, la boîte de vitesses 110 permet d'établir un rapport de marche arrière qui est obtenu par embrayage du quatrième jeu de dentures 48 sur l'arbre primaire 112 et par crabotage du pignon fou 134 par l'intermédiaire du crabot double 158. Dans ce cas, le couple du moteur transite par l'intermédiaire de l'ensemble portant les pignons fous 122, 124 et 128 qui joue le rôle d'un pignon intermédiaire destiné à inverser le sens de rotation du deuxième arbre secondaire 116 par rapport à l'arbre primaire 112. L'engrènement direct des pignons fous 128 et 134 permet de transmettre ce couple au deuxième arbre secondaire 116.

Ainsi, l'ensemble constitué des pignons fous 122, 124, et 128, qui permet, pour ce rapport de démultiplication d'inverser le sens de rotation, présente un encombrement réduit dans le carter (non représenté) de la boîte de vitesses 110. Cette disposition est particulièrement avantageuse, car elle utilise un pignon fou 128 coaxial au premier arbre secondaire 114, et permet par conséquent de réduire l'encombrement transversal du carter de la boîte de vitesses 110 par rapport à une boîte de vitesses conventionnelle. Une telle disposition nécessite de ce fait une architecture en V des arbres 112, 114 et 116 dans le plan transversal, pour permettre l'engrènement du pignon de marche arrière 128 et du sixième pignon fou 134.

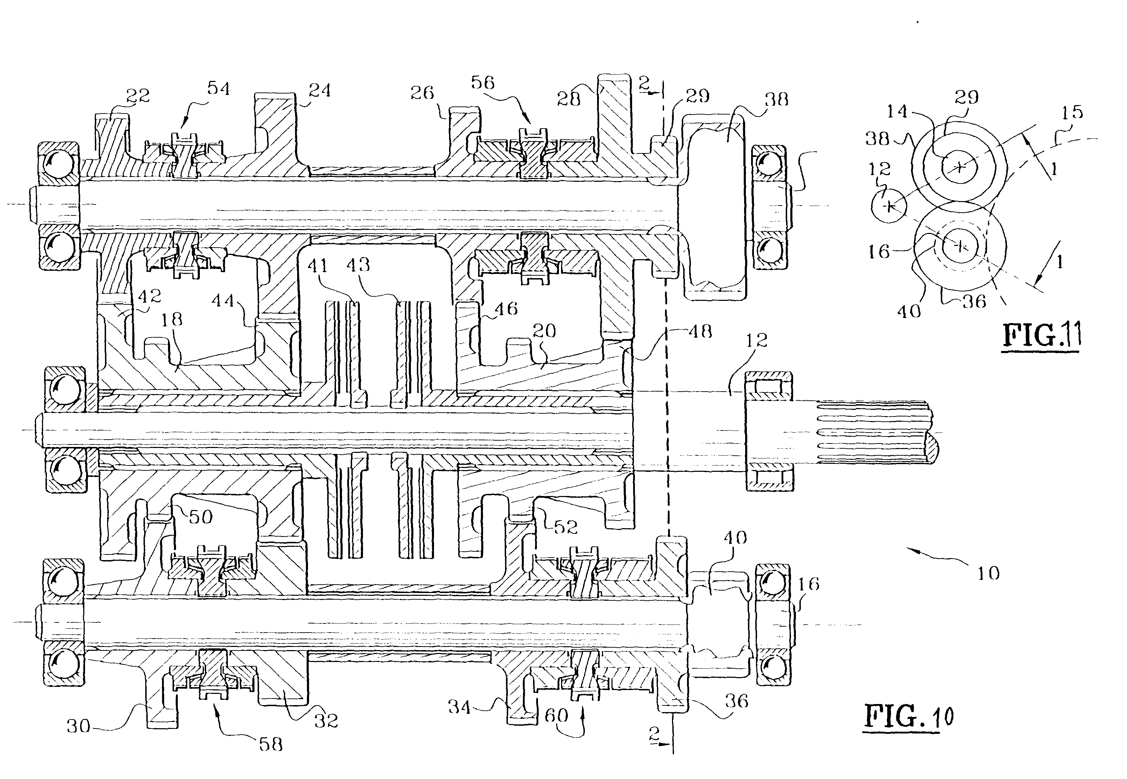

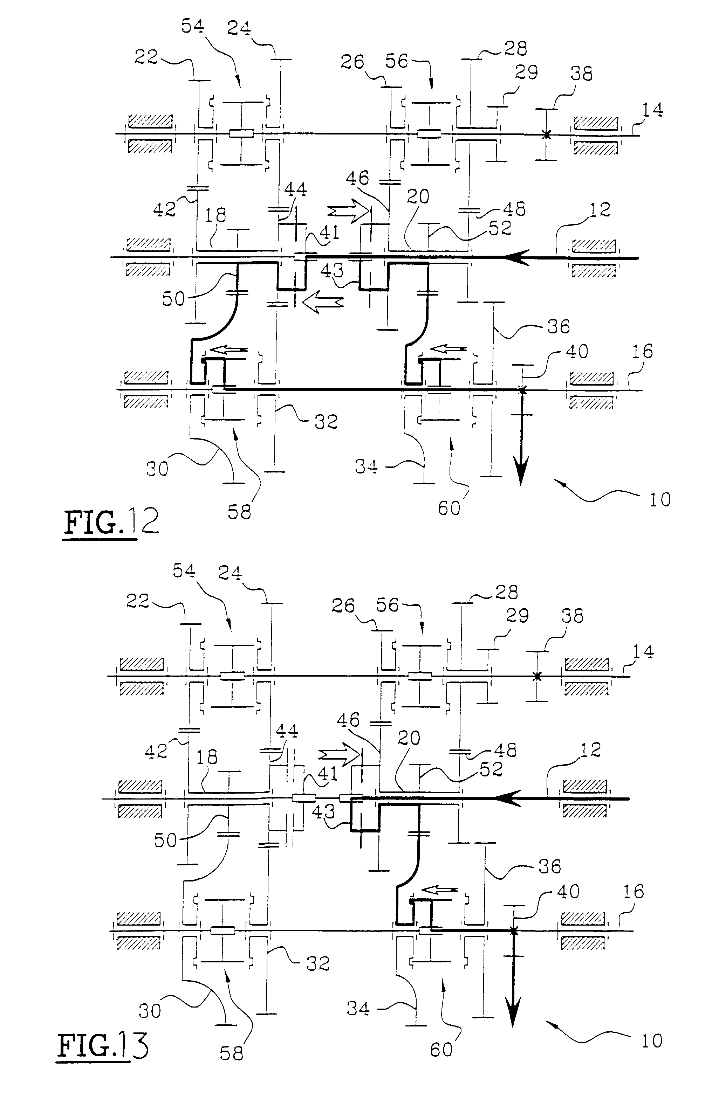

On voit sur la figure 10 l'ensemble d'une deuxième boîte de vitesses 10 réalisée suivant l'invention. De manière connue, la boîte de vitesses 10 comporte trois arbres parallèles, un arbre primaire 12 et deux arbres secondaires 14 et 16. Dans un plan transversal à la direction des axes de l'arbre primaire 12, du premier arbre secondaire 14 et du deuxième arbre secondaire 16, et comme on peut le voir sur la représentation schématique de la figure 11, les axes des arbres 12, 14, et 16 sont disposés au sommets d'un V.

Conformément à l'invention, la boîte comporte des pignons qui sont montés fous à rotation sur leurs arbres respectifs.

Ainsi, de la gauche vers la droite de la figure 10, l'arbre primaire 12 de la boîte de vitesses 10 porte deux pignons fous 18 et 20 comportant chacun deux jeux de dentures, le premier arbre secondaire 14 porte trois pignons fous 22, 24, et 28, solidaires en rotation les uns des autres et, un pignon fou de marche arrière 29 qui est lié en rotation au pignon fou 28. D'une manière analogue, le deuxième arbre secondaire 16 porte quatre pignons fous 30, 32, 34 et 36.

Cet exemple de disposition est ici adapté à une boîte de vitesses définissant six rapports de marche avant et un rapport de marche arrière, mais n'est en aucun cas restrictif de l'invention. Un nombre de pignons plus important permettrait de disposer d'une boîte de vitesses offrant plus de rapports de démultiplication.

Les pignons fous 18 et 20 de l'arbre primaire 12 sont disposés axialement de part et d'autre d'un premier embrayage 50 et d'un deuxième embrayage 52, dont la fonction sera décrite ultérieurement.

D'une manière analogue, les pignons fous des arbres secondaires sont agencés de part et d'autre des embrayages 41 et 43. Ainsi, les pignons fous 22 et 24 du premier arbre secondaire 14 et les pignons fous 30 et 32 du deuxième arbre secondaire 16 sont agencés du même côté gauche de la figure 10 que le pignon fou 18 de l'arbre primaire 12. De même, les pignons fous 26, 28 et 29 du premier arbre secondaire 14, et les pignons fous 34 et 36 du deuxième arbre secondaire 16 sont agencés du même côté droit que le pignon fou 20 de l'arbre primaire 12.

La boîte de vitesses 10 réalise plusieurs engrenages formés par des couples de pignons fous appartenant à l'arbre primaire 12 et aux arbres secondaires 14 et 16. Tous les pignons fous engrènent en permanence et des moyens de crabotage, en ce qui concerne les arbres secondaires 14 et 16, et d'embrayage, en ce qui concerne l'arbre primaire 12, permettent de lier sélectivement les pignons fous aux arbres qui les portent, pour permettre, comme on le verra ultérieurement, à ces engrenages de transmettre le couple du moteur de l'arbre primaire 12 à un arbre secondaire 14 ou 16.

Ainsi, comme l'illustre la figure 11, un couple moteur appliqué à l'arbre d'entrée 12 peut être transmis soit au premier arbre secondaire 14 qui est susceptible de le transmettre à une couronne 15 du différentiel du véhicule par l'intermédiaire d'un pignon de sortie 38, soit au deuxième arbre secondaire 16 qui le transmet à la même couronne 15 de différentiel par l'intermédiaire d'un pignon de sortie 40, ces deux pignons de sortie étant 38 et 40 étant solidaires en rotation des arbres 14 et 16 respectivement.

Sur la figure 10, les pignons fous des arbres secondaires sont référencés par ordre croissant de la gauche vers la droite et du haut vers le bas.

Dans cette configuration, les premier et deuxième pignons fous 22 et 24 du premier arbre secondaire 14 engrènent respectivement en permanence avec un premier jeu 42 et un troisième jeux 44 de dentures du premier pignon fou 18 de l'arbre primaire 12, et les troisième et quatrième pignons fous 26 et 28 du premier arbre secondaire 14 engrènent respectivement en permanence avec un quatrième jeu 46 et un sixième jeu 48 de dentures du deuxième pignon fou 20 de l'arbre primaire 12.

D'une manière analogue, les cinquième et sixième pignons fous 30 et 32 du deuxième arbre secondaire 16 engrènent respectivement en permanence avec un deuxième jeu de dentures 50 et le troisième jeu 44 de dentures du premier pignon fou 18 de l'arbre primaire 12, et le septième pignon fou 34 engrène en permanence avec un cinquième jeu de dentures 52 du deuxième pignon fou 20 de l'arbre primaire 12. Le troisième jeu de dentures 44 du premier pignon fou 18 de l'arbre primaire 12 est donc commun à deux engrenages.

Enfin, le huitième pignon fou de marche arrière 29, qui est solidaire en rotation du quatrième pignon fou 28 du premier arbre secondaire 14, engrène en permanence avec le huitième pignon fou 36 du deuxième arbre secondaire 16 pour, comme on le verra ultérieurement, définir un rapport de marche arrière.

La boîte de vitesses 10 permet d'établir différents rapports de réduction ou de démultiplication déterminés par la liaison en rotation des pignons fous aux arbres qui les portent, liaison faisant intervenir au moins un pignon fou de l'arbre primaire 12 et au moins un pignon fou d'un des arbres secondaires 14 ou 16.

Dans ce but, les moyens d'embrayage, comportant les embrayages 41 et 43 précédemment décrits, permettent de lier respectivement en rotation le premier pignon fou 18 ou le deuxième pignon fou 20 à l'arbre primaire 12.

Dans le mode de réalisation préféré de l'invention, la boîte de vitesses 10 ne comporte que les deux embrayages 41 et 43, et l'arbre primaire 12 est directement entraîné par le moteur du véhicule.

Avantageusement, l'arbre primaire 12, entraîné en permanence en rotation par le moteur (non représenté) du véhicule, est susceptible de transmettre le couple du moteur aux arbres secondaires 14 et 16 par l'intermédiaire des premier et deuxième pignons fous 18 ou 20, liés en rotation à l'arbre primaire 12 sur par l'intermédiaire des embrayages 41 ou 43, si bien qu'un véhicule équipé d'une telle boîte ne nécessite pas d'embrayage interposé entre le moteur et la boîte de vitesses 10.

D'une manière analogue aux pignons fous de l'arbre primaire 12, tous les pignons fous des arbres secondaires 14 et 16 peuvent être sélectivement liés aux arbres qui les portent. Ainsi, un premier crabot double 54 permet de lier sélectivement en rotation le premier pignon fou 22 ou le deuxième pignon fou 24 au premier arbre secondaire 14, un deuxième crabot double 56 permet de lier sélectivement le troisième pignon fou 26 ou le quatrième pignon fou 28 solidaire du pignon de marche arrière 29 au premier arbre secondaire 14, un troisième crabot double 58 permet de lier sélectivement le cinquième pignon fou 30 ou le sixième pignon fou 32 au deuxième arbre secondaire 16, et un quatrième crabot double 60 permet de lier sélectivement le septième pignon fou 34 ou le huitième pignon fou 36 en rotation au deuxième arbre secondaire 16.

Le fonctionnement d'un crabot double étant connu de l'état de la technique, il ne fera pas l'objet d'un approfondissement particulier dans cette description.

Avantageusement, en vue de la réalisation d'une boîte de vitesses à commande dite "robotisée", les crabots 54, 56, 58 et 60, ainsi que les embrayages 41 et 43, sont actionnés par des actionneurs (non représentés) commandés par une unité centrale de commande (non représentée) de la boîte de vitesses 10. La boîte de vitesses 10 est ainsi appelée boîte de vitesses robotisée, dans la mesure où les actionneurs sont commandés par l'unité centrale de commande, cette dernière étant associée à un logiciel de commande. Le logiciel de commande peut fonctionner en réponse à des ordres transmis par le conducteur à un levier de changement de vitesses, et la boîte de vitesses fonctionne alors comme une boîte à commande manuelle conventionnelle. Le logiciel de commande peut aussi fonctionner en réponse à des informations transmises par des commandes et capteurs du véhicule, tels que la position d'une commande d'accélérateur, la position d'une commande de freins, des capteurs de couple, de vitesse, qui permettent de déterminer un fonctionnement de la boîte de vitesses analogue à celui d'une boîte à commande automatique conventionnelle.

L'unité centrale, commandée par le logiciel de commande, émet alors des ordres d'actionnement des crabots 54,56,58, et 60 et des embrayages 41 et 43.

Les figures 12 et 13 illustrent le fonctionnement de la boîte de vitesses 10 selon un premier rapport de marche avant.

Dans la configuration décrite en référence à la figure 12, et qui correspond à un usage de la boîte de vitesses intervenant par exemple lors du démarrage du véhicule, les deux embrayages 41 et 43 sont actionnés simultanément pour lier en rotation les pignons fous 18 et 20 à l'arbre primaire, les troisième 58 et quatrième 60 crabots 60 liant respectivement en rotation les cinquième et septième pignons fous 30 et 34 à l'arbre secondaire 16, de sorte que la sollicitation en couple importante qui est nécessaire au lancement du véhicule initialement à l'arrêt, peut être transmise au deuxième arbre secondaire 16 en utilisant la capacité totale des deux embrayages 41 et 43. Une telle disposition implique nécessairement que le rapport de réduction défini par l'engrenage formé du deuxième jeu de dentures 50 et du cinquième pignon fou 30, et que le rapport de réduction défini par l'engrenage formé du cinquième jeu de dentures 52 et du septième pignon fou 34, soient égaux.

Avantageusement, ce premier rapport de démultiplication permet, comparativement à une boîte de vitesses conventionnelle associée à un seul embrayage, de réduire la taille des embrayages 41 et 43, le diamètre d'un embrayage étant directement lié à l'énergie qu'il est nécessaire de dissiper lors du glissement de ses garnitures de friction.

La figure 13 illustre le fonctionnement de la boîte de vitesses 10 selon un premier rapport de marche avant qui est susceptible d'être engagé lorsque le véhicule est lancé, c'est à dire par exemple à l'issue d'un fonctionnement suivant le premier rapport de marche avant décrit en référence à la figure 12.

Dans cette configuration, la boîte de vitesses 10 n'a plus de couple important à transmettre. Pour cette raison, il n'y a plus de glissement des garnitures de friction des embrayages et donc plus d'énergie à dissiper dans celles-ci. Dans ce cas, l'embrayage 41 est débrayé, le rapport de démultiplication de premier rapport de marche avant étant maintenu par le maintien de l'actionnement de l'embrayage 43, qui est alors capable de transmettre sans glissement la totalité du couple moteur en liant en rotation le cinquième jeu de dentures 52 à l'arbre primaire 12, le quatrième crabot 60 liant en rotation le septième pignon fou 34 au deuxième arbre secondaire 16.

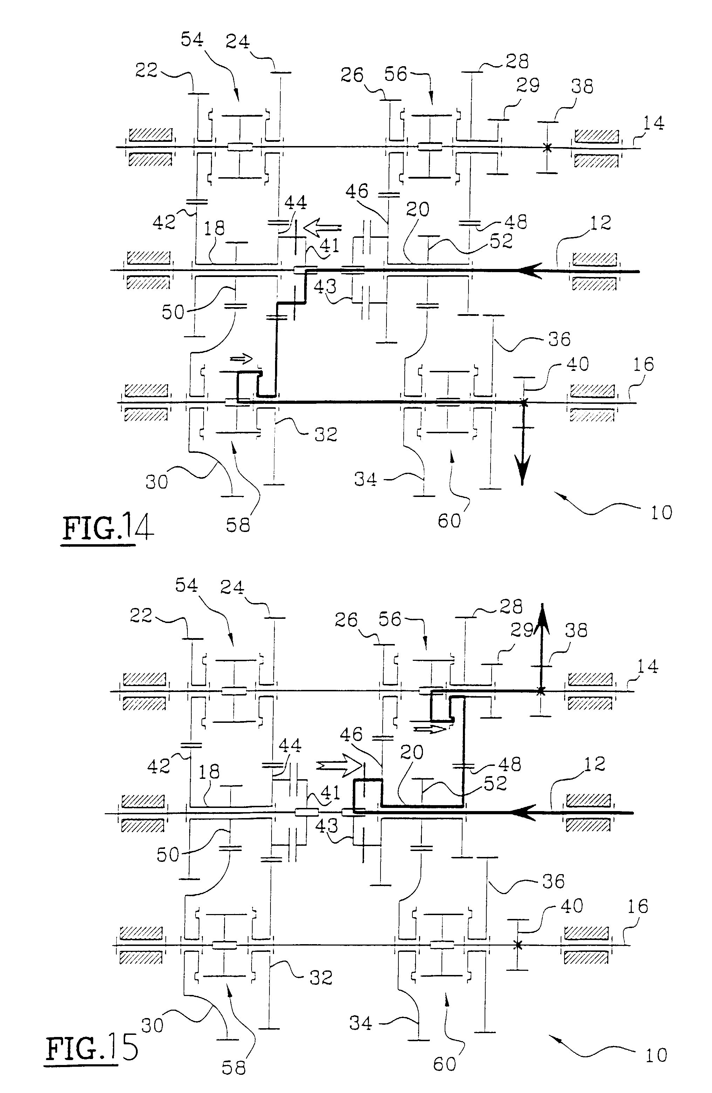

Lorsque l'unité centrale de commande déclenche le passage d'un rapport inférieur à un rapport supérieur consécutif, et comme c'est notamment le cas lors du passage du premier rapport de marche avant au deuxième rapport de marche avant illustré en référence à la figure 14, l'unité centrale de commande de la boîte de vitesses 10 commande le crabotage du pignon fou d'arbre secondaire correspondant au rapport consécutif désiré, puis embraye progressivement l'embrayage associé au pignon fou de l'arbre primaire correspondant au rapport supérieur, en même temps qu'il débraye l'embrayage associé au pignon fou de l'arbre primaire correspondant au rapport inférieur, puis décrabote le crabot correspondant au rapport inférieur.

Ainsi, comme représenté à la figure 14, le passage du premier rapport de marche avant au deuxième rapport de marche avant est réalisé par crabotage du sixième pignon fou 32 sur le deuxième arbre secondaire 16, puis par embrayage progressif du premier pignon fou 18 de l'arbre primaire 12 par l'intermédiaire de l'embrayage 41, en même temps que l'embrayage 43 est progressivement relâché, désaccouplant ainsi le deuxième pignon fou 20 de l'arbre primaire 12, puis le quatrième crabot 60 décrabote le septième pignon fou 34 du deuxième arbre primaire 16.

On voit que le passage d'un rapport inférieur à un rapport supérieur consécutif s'effectue par transfert progressif du couple moteur d'un engrenage à un autre, en "passant" d'un embrayage à un autre, ce qui présente l'avantage de ne pas interrompre la transmission du couple de l'arbre primaire 12 à l'arbre secondaire 14 ou 16 correspondant au rapport engagé, et permet d'améliorer les performances du véhicule tout en augmentant l'agrément de conduite. La boîte de vitesses 10 selon l'invention permet par conséquent des changements de rapport progressifs, la "montée" des rapports s'effectuant par une suite de basculements alternés des embrayages 41 et 43.

Comme l'illustre la figure 15, l'engagement d'un troisième rapport de marche avant est effectué par crabotage du quatrième pignon fou 28 par le deuxième crabot double 56 et par embrayage progressif du sixième jeu de dentures 48 par le deuxième embrayage 43.

Dans ce cas, le couple moteur n'est plus transmis par le deuxième arbre secondaire 16 mais par le premier arbre secondaire 14.

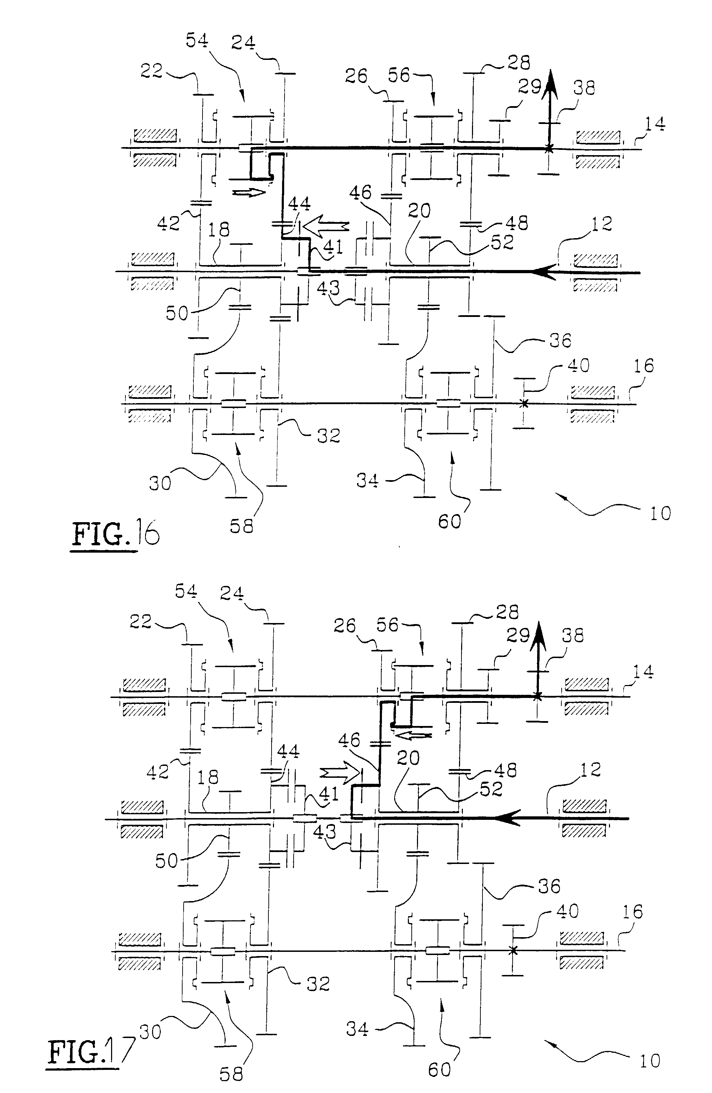

D'une façon analogue, comme l'illustre la figure 16, un quatrième rapport de marche avant est obtenu par embrayage progressif du troisième jeu de dentures 44 par l'intermédiaire de l'embrayage 41, et par crabotage du deuxième pignon fou 24 du premier arbre secondaire 14 par l'intermédiaire du premier crabot double 54.

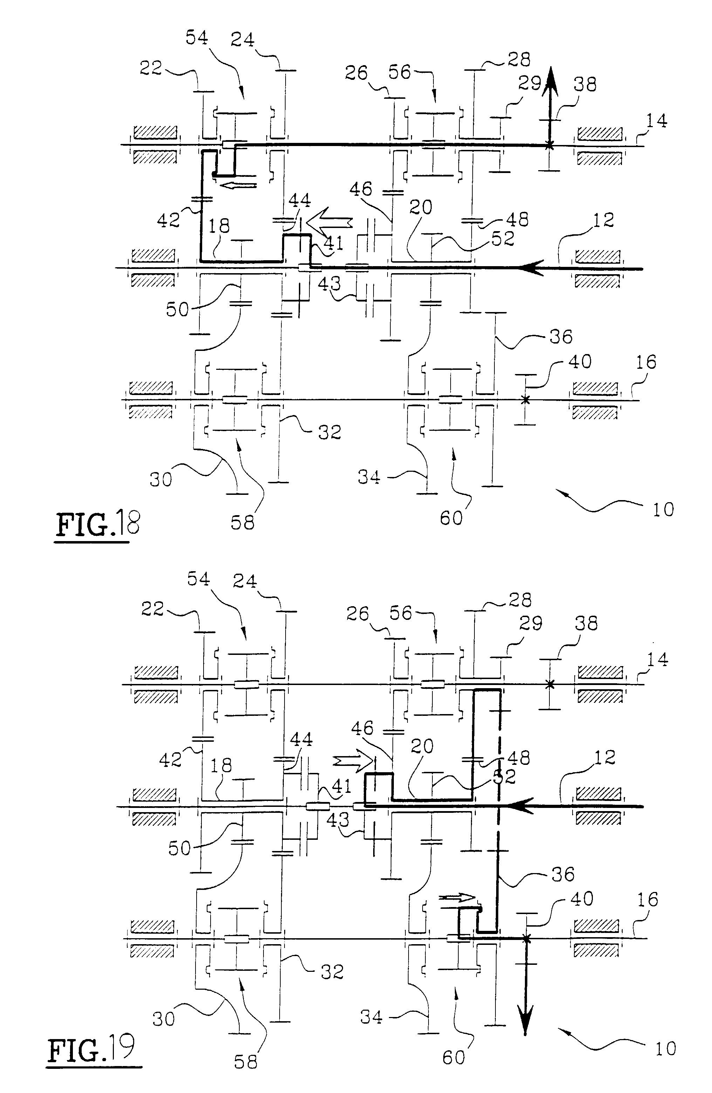

Un cinquième rapport de marche avant est obtenu, comme on peut le voir à la figure 17, par embrayage du quatrième jeu de dentures 46 par l'intermédiaire du deuxième embrayage 43, et par crabotage du troisième pignon fou 26 du premier arbre secondaire 14 par l'intermédiaire du deuxième crabot double 56.

Enfin, comme l'illustre la figure 18, un sixième rapport de marche avant est obtenu par embrayage du premier jeu de dentures 42 par l'intermédiaire de l'embrayage 41, et par crabotage du premier pignon fou 22 par l'intermédiaire du premier crabot double 54.

En outre, la boîte de vitesses 10 permet d'établir un rapport de marche arrière qui est obtenu par embrayage du troisième jeu de dentures 48 sur l'arbre primaire 12 par l'intermédiaire du deuxième embrayage 43, et par crabotage du huitième pignon fou 36 par l'intermédiaire du quatrième crabot double 60.

Pour ce rapport de démultiplication, le couple moteur transite successivement par l'embrayage 43, le sixième jeu de dentures 48, le quatrième pignon fou 28 qui est solidaire en rotation du pignon fou 29 monté fou à rotation sur le premier arbre secondaire 14, puis par le huitième pignon fou 36 du deuxième arbre secondaire 16. Ainsi, l'ensemble constitué du quatrième pignon fou 28 et du pignon fou 29 de marche arrière joue le rôle habituellement attribué, dans une boîte de vitesses conventionnelle, à un pignon intermédiaire de marche arrière qui permet d'inverser le sens de rotation en sortie de la boîte de vitesses. Cette disposition est particulièrement avantageuse, car elle permet de faire l'économie d'un pignon supplémentaire en réutilisant le pignon fou 28 déjà existant, et permet par conséquent de réduire l'encombrement transversal du carter de la boîte de vitesses 10. Une telle disposition nécessite de ce fait une architecture en V des arbres 12, 14 et 16 dans le plan transversal, pour permettre l'engrènement du pignon 29 de marche arrière et du huitième pignon fou 36.

De plus, cet agencement particulier au rapport de marche arrière permet avantageusement, par exemple lorsque le véhicule manoeuvre dans un parking, de passer rapidement du premier rapport de marche avant défini en relation à la figure 3, au rapport de marche arrière défini en relation à la figure 19.

En effet, dans ce cas particulier, les embrayages 41 et 43 sont initialement embrayés. l'unité centrale de commande alors que l'embrayage 43 soit relâché un court instant pour permettre au quatrième crabot double 60 de décraboter le septième pignon fou 34 puis de craboter le huitième pignon fou 36, tandis qu'un premier rapport de marche avant, qui ne correspond pas aux rapports de marche avant précédemment définis, est maintenu par l'embrayage 41. Puis, l'embrayage 41 est relâché, et l'embrayage 43 à nouveau embrayé, permettant le passage en marche arrière.

## Revendications

1. Boîte de vitesses (110) de véhicule automobile, à arbres parallèles (112, 114, 116), du type qui comporte un arbre primaire (112) lié en rotation au moteur du véhicule, et deux arbres secondaires (114, 116) liés chacun en rotation à une couronne d'un différentiel pour entraîner les roues du véhicule, du type dans lequel des pignons (118, 120) portés par l'arbre primaire (112) engrènent avec des pignons (122, 124, 126, 128, 129, 130, 132, 134, 136) portés par les arbres secondaires (114, 116) pour établir sélectivement différents rapports de démultiplication et transmettre un couple du moteur aux roues du véhicule,
caractérisée en ce que tous les pignons (118, 120, 122, 124, 130, 132, 134) sont montés fous à rotation sur leurs arbres respectifs (112, 114, 116), les pignons fous (122, 124, 128) d'un des arbres secondaires (114) étant tous solidaires en rotation les uns des autres, les pignons fous (122, 124, 128, 130, 132, 134) des arbres (114, 116) étant susceptibles d'être sélectivement liés en rotation aux arbres (114, 116) qui les portent par des moyens de crabotage 154, 156, 158), et les pignons fous (118, 120) de l'arbre primaire (112) étant susceptibles d'être sélectivement liés en rotation à l'arbre (112) qui les porte par un premier (150) et un deuxième (152) embrayage indépendants associés, pour établir les rapports de de démultiplication, les deux embrayages (150, 152) etant par ailleurs susceptibles d'être actionnés alternativement, pour permettre des changements de rapports sans discontinuité du couple transmis aux roues du véhicule.

2. Boîte de vitesses (110) selon la revendication 1, caractérisée en ce que l'arbre primaire (112) porte un premier pignon fou (118) comportant un premier (142) et un deuxième (144) jeux de dentures, et un deuxième pignon fou (120) comportant un troisième (146) et un quatrième (148) jeux de 122, 124, 128, 130, 132, 134) des arbres secondaires (114, 116).

3. Boîte de vitesses (110) selon la revendication 2, caractérisée en ce qu'un premier arbre secondaire (114) porte un premier (122) et un deuxième (124) pignons fous, solidaires en rotation, qui engrènent respectivement avec le deuxième (144) et quatrième (148) jeux de dentures appartenant chacun respectivement au premier (118 )et au deuxième (120) pignons fous de l'arbre primaire (112), et porte un troisième pignon (128) de marche arrière, solidaire en rotation des premier (122) et deuxième (124) pignons fous, qui engrène avec un pignon fou (134) d'un deuxième arbre secondaire (116).

4. Boîte de vitesses (110) selon la revendication 3, caractérisée en ce que le deuxième arbre secondaire (116) porte trois pignons fous (130, 132, 134) indépendants, parmi lesquels un quatrième pignon (130) fou qui engrène avec le premier jeu (142 de dentures appartenant au premier pignon fou (118) de l'arbre primaire (112), un cinquième pignon 132) fou qui engrène avec le troisième jeu (146) de dentures appartenant au deuxième pignon fou (120) de l'arbre primaire (112), et un sixième pignon fou (134) qui engrène avec le troisième pignon fou (128) de marche arrière du premier arbre secondaire (114).

5. Boîte de vitesses (110) selon la revendication 4, caractérisée en ce que les moyens de crabotage (154, 156, 158) comportent:
- un premier crabot simple (154) permettant de craboter simultanément les pignons fous (122, 124, 128) solidaires en rotation sur le premier arbre secondaire (114),
- un deuxième crabot simple (156) permettant de craboter le quatrième pignon fou (130) sur le deuxième arbre secondaire (116), et
- un troisième crabot double (158) permettant de craboter sélectivement le cinquième (132) ou bien le sixième (34) pignon fou sur le deuxième arbre secondaire (116).

6. Boîte de vitesses (110) selon la revendication 5, caractérisée en ce que :
- un premier rapport de marche avant correspond à l'actionnement du deuxième embrayage (152) associé au deuxième pignon fou (120), le premier embrayage (150) associé au premier pignon fou (118) étant relâché, et au crabotage du quatrième pignon fou (130),
- un deuxième rapport de marche avant correspond à l'actionnement du premier embrayage (150), le deuxième embrayage (152) étant relâché, et au crabotage du quatrième pignon fou (130),
- un troisième rapport de marche avant correspond à l'actionnement du deuxième embrayage (152), le premier embrayage (150) étant relâché, et au crabotage des pignons fous (122, 124, 128) portés par le premier arbre secondaire (114),
- un quatrième rapport de marche avant correspond à l'actionnement du premier embrayage (150), le deuxième embrayage (152) étant relâché, et au crabotage des pignons fous (122, 124, 128) portés par le premier arbre secondaire (114),
- un cinquième rapport de marche avant correspond à l'actionnement du deuxième embrayage (152), le premier embrayage (150) associé au premier pignon fou (118) de l'arbre primaire (112) étant relâché, et au crabotage du cinquième pignon fou (132),
- un sixième rapport de marche avant correspond à l'actionnement du premier embrayage (150), le deuxième embrayage (152) étant relâché, et au crabotage du cinquième pignon fou (132), et
- un rapport de marche arrière correspond à l'actionnement du deuxième embrayage (152), le premier embrayage (150) associé au premier pignon fou (18) de l'arbre primaire (112) étant relâché, et au crabotage du sixième pignon fou (134).

7. Boîte de vitesses (110) selon la revendication 6, caractérisée en ce que le passage d'un rapport inférieur de rang impair à un rapport supérieur de rang pair est commandé par relâchement progressif de l'embrayage (152) associé au rapport inférieur de rang impair, tandis que l'embrayage (150) associé au rapport supérieur de rang pair est actionné simultanément de manière progressive, de sorte que le changement de rapport est effectué sans discontinuité du couple transmis aux roues du véhicule.

8. Boîte de vitesses (110) selon la revendication 6, caractérisée en ce que le passage d'un rapport inférieur de rang pair à un rapport supérieur de rang impair consécutif est réalisé par relâchement de l'embrayage (150) associé au rapport inférieur de rang pair, puis par décrabotage du pignon correspondant au rapport inférieur de rang pair, puis par crabotage du pignon correspondant au rapport supérieur de rang impair, et enfin par actionnement de l'embrayage (152) associé au rapport supérieur de rang impair.

9. Boîte de vitesses selon l'une quelconque des revendications 6 à 8, caractérisée en ce que le passage d'un rapport supérieur à un rapport inférieur est réalisé par relâchement de l'embrayage associé au rapport supérieur, puis par décrabotage du pignon correspondant au rapport supérieur, puis par crabotage du pignon correspondant au rapport inférieur, et enfin par actionnement de l'embrayage associé au rapport inférieur.

10. Boîte de vitesses selon l'une quelconque des revendications 4 à 9, caractérisée en ce que les deux embrayages (150, 152) sont groupés dans une position centrale de la boîte (110) entre les deux pignons fous (118, 120) de l'arbre primaire (112), et en ce que les premier (122) et quatrième (130) pignons fous des arbres secondaires (114, 116) sont agencés d'un côté de l'ensemble formé par les embrayages (150, 152), les deuxième (124), troisième (128), cinquième (132) et sixième (134) pignons fous étant agencés du coté opposé.

11. Boîte de vitesses selon l'une quelconque des revendications précédentes, caractérisée en ce que les crabots (154, 156, 158) et les embrayages (150, 152) sont actionnés par des actionneurs, et en ce que la boîte (10) est associée à une unité centrale de commande des actionneurs.

12. Boîte de vitesses (10) de véhicule automobile, à arbres parallèles (12, 14, 16), du type qui comporte un arbre primaire (12) lié en rotation au moteur du véhicule, et deux arbres secondaires (14, 16) liés en rotation à une couronne d'un différentiel pour entraîner les roues du véhicule, du type dans lequel des pignons (18, 20) portés par l'arbre primaire (12) engrenent avec des pignons (22, 24, 26, 28, 29, 30, 32, 34, 36) portés par les arbres secondaires (14, 16) pour établir sélectivement différents rapports de démultiplication et transmettre un couple du moteur aux roues du véhicule,
caractérisée en ce que tous les pignons (18, 20, 22, 24, 26, 28, 29, 30, 32, 34, 36) sont montés fous à rotation sur leurs arbres respectifs (12, 14, 16), les pignons fous (22, 24, 26, 28, 29, 30, 32, 34, 36) des arbres secondaires (14, 16) étant susceptibles d'être sélectivement liés en rotation aux arbres (14, 16) qui les portent par des moyens de crabotage (54, 56, 58, 60) et les pignons fous (18, 20) de l'arbre primaire (12) étant susceptibles d'être sélectivement liés en rotation à l'arbre (12) qui les porte par au moins deux embrayages (41, 43) indépendants associés, de façon à réaliser des engrenages indépendants correspondant aux rapports de démultiplication associés aux pignons d'arbres secondaires (14, 16), les deux embrayages (41, 43) étant par ailleurs susceptibles d'être actionnés alternativement, en passant par un état dans lequel ils sont tous deux embrayés, pour permettre des changements de rapports sans discontinuité du couple transmis aux roues du véhicule.

13. Boîte de vitesses (10) selon la revendication 12, caractérisée en ce que deux des embrayages (41, 43), associés à deux pignons fous (18, 20) de l'arbre primaire (12) qui engrènent avec deux pignons fous d'un même arbre secondaire, sont susceptibles d'être actionnés ensemble pour définir un rapport déterminé de transmission, dans lequel ils sont simultanément embrayés pour transmettre un couple important.

14. Boîte de vitesses (10) selon la revendication 12 ou 13 caractérisée en ce qu'au moins un arbre secondaire (14) comporte un pignon fou (29) de marche arrière qui engrène directement avec un pignon fou (36) de l'autre arbre secondaire (16), pour déterminer un rapport de transmission de marche arrière.

15. Boîte de vitesses (10) selon revendication 12, 13, ou 14.caractérisée en ce que l'arbre primaire (12) comporte un premier (18) et un deuxième (20) pignons fous à trois jeux de dentures (42, 50, 44, 46, 52, 48), qui sont associés à un premier (41) et un deuxième (43) embrayages correspondants, et en ce que chaque arbre secondaire (14, 16) comporte quatre pignons fous (22, 24, 26, 28, 29, 30, 32,34, 36), associés deux par deux à quatre crabots doubles (54, 56, 58, 60) correspondants.

16. Boîte de vitesses (10) selon revendication 14 ou 15 caractérisée en ce que
- le premier arbre secondaire (14) porte un premier (22) et un deuxième (24) pignons fous engrenant respectivement avec un premier (42) et un troisième (44) jeux de dentures du premier pignon fou (18) de l'arbre primaire (12), porte un troisième (26) et un quatrième (28) pignons fous engrenant respectivement avec un quatrième (46) et un sixième (48) jeux de dentures du deuxième pignon fou (20) de l'arbre primaire (12), et porte le pignon (29) de marche arrière, qui est lié en rotation au quatrième pignon fou (28), et engrène avec un huitième pignon fou (36) du deuxième arbre secondaire (16);
- le deuxième arbre secondaire (16) porte un cinquième (30) et un sixième (32) pignons fous engrenant respectivement avec un deuxième (50) et le troisième (44) jeux de dentures du premier pignon fou (18) de l'arbre primaire (12), et porte un septième (34) et le huitième (36) pignons fous engrenant respectivement avec un cinquième jeu de dentures (52) du deuxième pignon fou (20) de l'arbre primaire (12) et avec le pignon (29) de marche arrière du premier arbre secondaire (14).

17. Boîte de vitesses (10) selon la revendication 15 ou 16, caractérisée en ce que les moyens de crabotage comportent :
- un premier crabot double (54) permettant de craboter sélectivement le premier (22) ou bien le deuxième (24) pignon fou sur le premier arbre secondaire (14) ;
- un deuxième crabot double (56) permettant de craboter sélectivement le troisième (26) ou bien le quatrième (28) pignon fou lié au pignon de marche arrière (29) sur le premier arbre secondaire (14) ;
- un troisième crabot double (58) permettant de craboter sélectivement le cinquième (30) ou bien le sixième (32) pignon fou sur le deuxième arbre secondaire (16) ; et
- un quatrième crabot double (60) permettant de craboter sélectivement le septième (34) ou le huitième (36) pignon fou sur le deuxième arbre secondaire (16).

18. Boîte de vitesses (10) selon la revendication 17, caractérisée en ce que :
- le premier rapport de marche avant correspond:
soit à l'actionnement du premier (41) et du deuxième (43) embrayages, et au crabotage respectif des cinquième (30) et septième (34) pignons fous pour transmettre un couple important,
soit à l'actionnement du seul deuxième embrayage (43), le premier embrayage (41) étant relâché, et au crabotage du septième pignon fou (34),
- le deuxième rapport de marche avant correspond à l'actionnement du premier embrayage (41), le deuxième embrayage étant relâché (43), et au crabotage du sixième pignon fou (32) ;
- le troisième rapport de marche avant correspond à l'actionnement du deuxième embrayage (43), le premier embrayage (41) étant relâché, et au crabotage du quatrième pignon fou (28) ;
- le quatrième rapport de marche avant correspond à l'actionnement du premier embrayage (41), le deuxième embrayage (43) étant relâché, et au crabotage du deuxième pignon fou (24) ;
- le cinquième rapport de marche avant correspond à l'actionnement du deuxième embrayage (43), le premier embrayage (41) étant relâché, et au crabotage du septième pignon fou (34) ;
- le sixième rapport de marche avant correspond à l'actionnement du premier embrayage (41), le deuxième embrayage (43) étant relâché, et au crabotage du premier pignon fou (22) ; et
- le rapport de marche arrière correspond à l'actionnement du deuxième embrayage (43), le premier embrayage étant relâché (41), et au crabotage du huitième pignon fou (36).

19. Boîte de vitesses (10) selon la revendication 18, caractérisée en ce que le passage d'un rapport inférieur à un rapport supérieur consécutif est réalisé par crabotage du pignon correspondant au rapport supérieur, puis par relâchement progressif de l'embrayage associé au rapport inférieur, tandis que l'embrayage associé au rapport supérieur est simultanément actionné progressivement, de sorte que le changement de rapport est effectué sans interruption du couple transmis aux roues du véhicule.

20. Boîte de vitesses (10) selon les revendications 18 ou 19, caractérisée en ce que le passage d'un rapport supérieur à un rapport inférieur quelconque est réalisé par relâchement de l'embrayage associé au rapport supérieur, puis décrabotage du pignon correspondant au rapport supérieur, l'embrayage associé au rapport supérieur étant relâché, puis par crabotage du pignon associé au rapport inférieur et enfin par actionnement de l'embrayage correspondant au rapport inférieur.

21. Boîte de vitesses (10) selon les revendications 18 ou 19, caractérisée en ce que le passage d'un rapport supérieur à un rapport inférieur consécutif est réalisé par crabotage du pignon correspondant au rapport inférieur, puis par relâchement progressif de l'embrayage associé au rapport supérieur, tandis que l'embrayage associé au rapport inférieur est actionné simultanément de manière progressive, de sorte que le changement de rapport est effectué sans interruption du couple transmis aux roues du véhicule.

22. Boîte de vitesses (10) selon l'une quelconque des revendications 15 à 21, caractérisée en ce que les deux embrayages (41, 43) sont groupés dans une position centrale de la boîte entre les deux pignons fous (18, 20) de l'arbre primaire (12), et en ce que les deux crabots (54, 56, 58, 60) de chaque arbre secondaire (14, 16) sont agencés de chaque côté de l'ensemble formé par les embrayages (41, 43).

23. Boîte de vitesses (10) selon l'une quelconque des revendications 12 à 22, caractérisée en ce que les crabots (54, 56, 58, 60) et les embrayages (41, 43) sont actionnés par des actionneurs et en ce que la boîte (10) est associée à une unité centrale de commande des actionneurs.
